# EUROPÄISCHE PATENTSCHRIFT

(11) **EP 2 298 061 B1**
(45) Veröffentlichungstag und Bekanntmachung des Hinweises auf die Patenterteilung: **15.03.2017**
(21) Anmeldenummer: 10169194.7
(22) Anmeldetag: 12.07.2010
(51) Int. Cl.: A01D 41/12

(54) **Verfahren zum Verteilen eines Gutstromes auf einem Feld sowie Häcksel- und Verteilvorrichtung**
Method for distributing a flow of goods on a field and shredding and distributing device
Procédé de répartition d'un flux de matière sur un champ et dispositif de hachage et de répartition

(30) Priorität: 21.09.2009 DE 102009042002
(43) Veröffentlichungstag der Anmeldung: 23.03.2011
(73) Patentinhaber: CLAAS Selbstfahrende Erntemaschinen GmbH, 33428 Harsewinkel (DE)
(72) Erfinder: Terörde, Stefan, 48231, Warendorf (DE); Brinkmann, Jörn, 33428, Harsewinkel (DE); Vieregge, Christopher, 32694, Dörentrup (DE); Niermann, Martin, 33428, Harsewinkel (DE)

(56) Entgegenhaltungen:
- EP-A1- 0 631 717
- EP-A1- 1 897 430
- WO-A1-2008/156419
- DE-B3- 10 350 123
- GB-A- 2 096 453
- US-A1- 2007 026 912

## Beschreibung

Die Erfindung betrifft ein Verfahren zum Verteilen eines Gutstromes auf einem Feld, welches aus einem Häckselorgan einer Häcksel- und Verteilvorrichtung, insbesondere einem Anbauhäcksler an einem Mähdrescher, austritt, wobei der Gutstrom mindestens einem quer zur Längsachse des Häckselorgans angeordneten Leitelement zugeführt wird, durch welches der Gutstrom beschleunigt und mindestens einer nachgeordneten Verteileinrichtung zugeführt wird, gemäß dem Oberbegriff des Anspruches 1. Weiterhin betrifft die Erfindung eine Häcksel- und Verteilvorrichtung zur Durchführung des Verfahrens, insbesondere einen Anbauhäcksler für Mähdrescher, mit wenigstens einem Häckselorgan, dem zumindest eine Verteileinrichtung zum Verteilen eines aus dem Häckselorgan austretenden Gutstromes zugeordnet ist, wobei der Gutstrom der mindestens einen Verteileinrichtung von mindestens einem quer zur Längsachse des Häckselorgans angeordneten Leitelement zugeführt wird, nach dem Oberbegriff des Anspruchs 6.

Die WO 2008/156419 A1 beschreibt einen Mähdrescher mit Strohhäcksler und quer zu diesem angeordneten Wurfgebläsen. Das von dem Strohhäcksler zerkleinerte Erntegut wird an das Wurfgebläse abgegeben und von diesem beschleunigt. Zwischen den Wurfgebläsen ist ein V-förmiges Verteilerelement angeordnet, welches um eine vertikale Achse pendelt.

Die EP 0631 717 A1 beschreibt einen Anbauhäcksler dem ein Wurfgebläse (6) zur Ausbringung von gehäckselten Erntegut nachgeordnet ist. An dem Wurfgebläse (6) ist ein Auswurfstutzen (7) angeordnet, der gemeinsam mit dem Wurfgebläse (6) oder unabhängig von diesem um eine vertikale Achse schwenkbar ist, um eine gleichmäßige Verteilung des Erntegutes zu erreichen.

Aus der DE 10 2006 042 553 A1 ist ein Verfahren zum Verteilen eines Gutstromes auf einem Feld sowie eine Häcksel- und Verteilvorrichtung der eingangs genannten Art bekannt. Die Häcksel- und Verteilvorrichtung umfasst ein Häckselorgan, dem zwei Leitelemente nachgeordnet sind, die sich quer zur Längsachse des Häckselorgans erstrecken. Die Leitelemente befördern einen aus dem Häckselorgan austretenden Gutstrom an zwei Verteileinrichtungen weiter, die sich ebenfalls quer zur Längsachse des Häckselorgans erstreckend, an dem jeweiligen Leitelement in Förderrichtung fluchtend angeordnet sind. Die beiden Verteileinrichtungen verteilen den Gutstrom über eine Teilstreubreite auf dem Feld. Die beiden Leitelemente und die diesen jeweils nachgeordneten Verteileinrichtungen sind in einer Ebene liegend angeordnet und durch Leitschienen miteinander verbunden, so dass die Beförderung des Gutstromes von den Leitelementen hin zu den Verteileinrichtungen auf einer Zuführebene erfolgt.

Als nachteilig an dieser Ausgestaltung gemäß dem Stand der Technik hat sich gezeigt, dass der von den Leitelementen beschleunigte Gutstrom senkrecht auf die rotierenden Elemente der jeweiligen Verteileinrichtung trifft, was zu einem Abbremsen des Gutstromes führt. Das Abbremsen des Gutstromes muss entsprechend durch die Verteileinrichtung kompensiert werden, indem der Gutstrom eine zusätzliche Beschleunigung erfährt, was mit einem höheren Energieaufwand einhergeht.

Aufgabe der vorliegenden Erfindung ist es, die Effizienz des Verfahrens zur Gutstromverteilung zu erhöhen sowie eine gleichmäßige Gutstromverteilung auch über große Verteilbreiten zu erreichent.

Hinsichtlich des Verfahrensanspruches wird die Aufgabe erfindungsgemäß durch die kennzeichnenden Merkmale des Patentanspruchs 1 gelöst. Mit Bezug auf die Vorrichtung wird die Aufgabe durch die kennzeichnenden Merkmale des Patentanspruchs 6 gelöst.

Vorteilhafte Weiterentwicklungen und Ausgestaltungen sind Gegenstand der jeweiligen Unteransprüche.

Gemäß dem Anspruch 1 wird vorgeschlagen, dass der aus dem mindestens einen Leitelement austretende Gutstrom von einer Zuführebene, in der der Gutstrom in das mindestens eine Leitelement eintritt, auf eine unterhalb der Zuführebene liegende Verteilebene gefördert wird, in der der Gutstrom von der mindestens einen Verteileinrichtung auf dem Feld verteilt wird. Indem der Gutstrom von der höherliegenden Zuführebene, in der der Gutstrom vom Häckslerorgan an das mindestens eine Leitelement abgegeben wird, auf die niedriger liegende Verteilebene der mindestens einen Verteileinrichtung befördert wird, wird das senkrechte Aufprallen des Gutstromes auf rotierenden Teile der mindestens einen Verteileinrichtung vermieden. Die kinetische Energie des von dem mindestens einen Leitelement beschleunigten Gutstromes bleibt in größerem Umfang erhalten, so dass sich der Energieaufwand für das Verteilen des Gutstromes durch die mindestens eine Verteileinrichtung verringert.
Vorzugsweise kann die Verteilebene gegenüber der Zuführebene quer und/oder senkrecht zu dieser geneigt werden. Somit kann diese in einfacher Weise variiert werden.

In vorteilhafter Weiterbildung des Verfahrens ist vorgesehen, dass der aus dem Häckselorgan austretende Gutstrom in dem Leitelement eine gegenüber der Verteileinrichtung gegenläufige Beschleunigung erfährt. Der in die mindestens eine Verteileinrichtung eintretende Gutstrom wird dadurch in dessen Zuführrichtung von den rotierenden Teilen der mindestens einen Verteileinrichtung erfasst und weiter beschleunigt. Der beförderte Gutstrom beschreibt dadurch einen im Wesentlichen S-förmigen Verlauf von der Zuführebene hin zu der Verteilebene.

Insbesondere kann der Gutstrom in dem Leitelement und der Verteileinrichtung unterschiedlich stark beschleunigt werden. So kann die Beschleunigung des Gutstromes in dem mindestens einen Leitelement auf der Zuführebene geringer gewählt werden, als in der dem Leitelement nachgeordneten Verteileinrichtung, da auf Grund der zweifachen Beschleunigung höhere Umfangsgeschwindigkeiten des Gutstromes realisierbar sind, als bei der aus dem Stand der Technik bekannten Häcksel- und Verteilvorrichtung.

Vorzugsweise kann die Beschleunigung des Gutstromes in dem Leitelement und der Verteileinrichtung unabhängig voneinander eingestellt werden. Dies hat den Vorteil, dass die Beschleunigung, die auf den Gutstrom durch das mindestens eine Leitelement und die mindestens eine Verteileinrichtung aufgebracht wird, an die unterschiedlichen Einflussparameter, wie die Restfeuchtigkeit des zu verteilenden Gutes, anpassbar ist. Dies trägt zudem zu einer Steigerung der Effizienz respektive der Senkung des Energieverbrauches bei. Durch die unabhängige Einstellung der Beschleunigung kann eine gleichmäßige, entsprechend einer Voreinstellung gewählte Verteilbreite eingehalten werden, die sich üblicherweise an der Arbeitsbreite der landwirtschaftlichen Erntemaschine orientiert.

Um bei einer Unterbrechung des Erntevorganges respektive des Häckselvorganges durch die Abschaltung des Aggregates ein Festsetzten des Gutstromes zwischen dem Leitelement und der Verteileinrichtung zu vermeiden, kann die Verteileinrichtung über einen nach unten offenen, profilierten Kanal mit dem Leitelement verbunden sein, so dass das in dem Kanal befindliche Gut nach unten herausfallen kann.

Weiterhin können das Leitelement und die Verteileinrichtung in Längsrichtung der Häcksel- und Verteilvorrichtung gesehen derart versetzt zueinander angeordnet sind, dass der Gutstrom tangential zur Wandung der Verteileinrichtung in diese eintritt, wodurch Verluste der kinetischen Energie, die durch eine erste Beschleunigung des Gutstromes in dem Leitelement auf diesen aufgebracht wurde, verringert werden.

Vorteilhafterweise ist die Verteileinrichtung aus einer Betriebsposition, in der eine gleichmäßige Verteilung des Gutstromes auf dem Feld über eine Verteilbreite erfolgt, die der Arbeitsbreite einer landwirtschaftlichen Erntemaschine entspricht, in eine Transport- oder Schwadposition überführbar. Zu Transportzwecken oder zur Schwadablage kann die Verteileinrichtung hierzu um eine zu der Längsachse der Verteilvorrichtung parallele Achse verschwenkbar sein. Die Verteileinrichtung lässt sich somit in eine Position überführen, in der die Gesamtbereite des Mähdreschers die für die Straßenzulassung erforderliche Breite des Fahrzeuges nicht überschritten wird. In dieser Position ist auch die Ablage des Gutstroms als Schwade auf dem Feld möglich.

Als Antrieb für das Leitelement kann ein mechanischer Antrieb vorgesehen sein, während die Verteileinrichtung vorzugsweise einen hydraulischen Antrieb aufweisen kann. Ebenso sind der umgekehrte Fall wie auch der Einsatz nur eines Antriebstypen denkbar.

Um eine optimierte Verteilbreite sowie eine effiziente Ausnutzung der notwendigen Antriebsenergie zu erreichen, können die Antriebe des Leitelementes und der Verteileinrichtung unabhängig voneinander ansteuerbar sein. Dadurch lässt sich eine einfache Anpassbarkeit an sich ändernde Arbeitsbedingungen erreichen, wie unterschiedliche Verteilbreiten oder unterschiedliche Zusammensetzungen des Gutstromes.

Vorzugsweise sind das Leitelement und die Verteileinrichtung als Radialverteiler ausgeführt.

In vorteilhafter Weiterbildung können das Leitelement und die Verteileinrichtung modular ausgeführt sein. Dies erlaubt die Nachrüstbarkeit einer bestehenden Häcksel- und Verteilvorrichtung, um diese hinsichtlich der Verteilbreite flexibler zu gestalten.

Die Erfindung wird nachstehend anhand eines in den Zeichnungen dargestellten Ausführungsbeispieles näher erläutert.

Es zeigen:
- Fig. 1: eine schematische Seitenansicht eines selbstfahrenden Mähdreschers mit einer Häcksel- und Verteilvorrichtung;
- Fig. 2: eine perspektivische Ansicht von oben auf eine Verteilvorrichtung der Häcksel- und Verteilvorrichtung in ihrer Arbeitsposition;
- Fig. 3: eine Ansicht der Verteilvorrichtung gemäß Figur 2 von unten;
- Fig. 4: eine perspektivische Ansicht der Häcksel- und Verteilvorrichtung in einer Transport- oder Schwadposition.

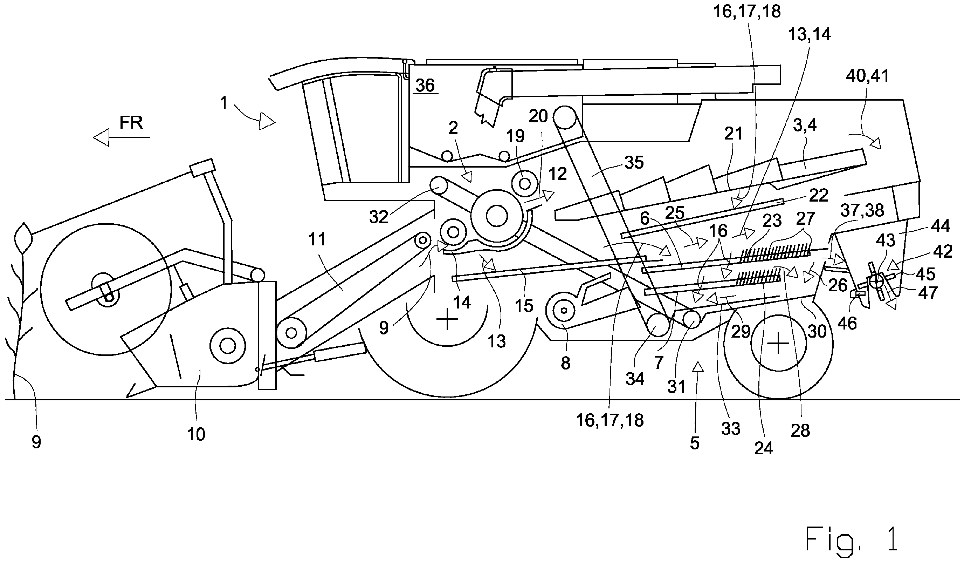

Fig.1 zeigt die Seitenansicht einer als Mähdrescher 1 ausgeführten Erntemaschine mit einem an sich bekannten und daher hier nicht näher beschriebenen Dreschwerk 2 und einem diesem nachgeordneten Hordenschüttler 3 als Abscheideorgan 4. Unterhalb des Hordenschüttlers 3 befindet sich eine Reinigungseinrichtung 5, bestehend aus zwei übereinander angeordneten Sieben 6, 7 und einem Reinigungsgebläse 8. Die Erfindung ist aber ausdrücklich nicht auf derartig ausgeführte Mähdreschertypen beschränkt, sondern bezieht sich beispielsweise auch auf Mähdrescher mit Rotoren als Abscheideorgan.

Im vorderen Bereich ist an dem Mähdrescher 1 ein Schneidwerk 10 angeordnet, mit dem das Erntegut 9 geschnitten und aufgenommen wird. Das Schneidwerk 10 führt das Erntegut 9 einem Schrägförderer 11 zu, der frontseitig am Mähdrescher 1 angeordnet ist Der Schrägförderer 4 übergibt das Erntegut 9 an das im Maschinengehäuse 12 angeordnete Dreschwerk 2. Das Dreschwerk 2 bearbeitet das Erntegut 9 intensiv, so dass die Körner aus den Früchten des Ernteguts 9 herausgelöst werden. Ein überwiegend aus Körnern bestehendes Korn-Spreu-Gemisch 13 wird an dem Dresch- und Abscheidekorb 14 des Dreschwerks 2 abgeschieden und gelangt über einen Vorbereitungsboden 15 zu der Reinigungseinrichtung 5, um die Körner 16 von den Nichtkornbestandteilen, das heißt von Halm- 17 und Spreuteilen 18 zu trennen.

Im rückwärtigen Bereich ist dem Dreschwerk 2 eine rotierende Wendetrommel 19 zugeordnet, die den aus dem Dreschwerk 2 austretenden, im Wesentlichen aus ausgedroschenen Halmen bestehenden Gutstrom 20 annimmt und dem Hordenschüttler 3 zuführt, die den Gutstrom 20 in den rückwärtigen Bereich des Mähdreschers 1 fördert. Dabei werden die noch im Gutstrom 20 befindlichen Körner 16 sowie eventuell Kurzstroh 17 und Spreu 18 abgetrennt, indem sie durch den mit Sieböffnungen 21 versehenen Hordenschüttler 3 hindurch auf einen Rücklaufboden 22 fallen. Der Rücklaufboden 22 transportiert Körner 16, Kurzstroh 17 und Spreu 18 zum Vorbereitungsboden 15.

Die Körner 16, das Kurzstroh 17 und die Spreu 18 gelangen schließlich ebenfalls über den Vorbereitungsboden 15 in die Reinigungseinrichtung 5, in welcher die Körner 16 vom Kurzstroh 17 und von der Spreu 18 getrennt werden. Dies erfolgt in der Weise, dass durch die Sieböffnungen 23, 24 im Obersieb 6 und im Untersieb 7 mittels des Gebläses 8 ein Luftstrom hindurchgefördert wird, welcher das über die Siebe 6, 7 in den hinteren Bereich des Mähdreschers 1 geführte Erntegut 25 auflockert und für das Heraustrennen der spezifisch leichteren Spreu- und Kurzstrohanteile 17, 18 sorgt, während die schweren Erntegutkörner 16 durch die Sieböffnungen 23, 24 fallen.

Ein Siebdurchgang 26, der im Überkehrbereich 27 durch das Obersieb 6 hindurch fällt und ein Siebüberlauf 28 am Ende des Untersiebs 7, enthält in der Regel schwerere Teilchen, das heißt unausgedroschene Ähren. Der Siebdurchgang 26 zusammen mit dem Siebüberlauf 28 wird nachfolgend als sogenannte Überkehrerntegutmenge 29 bezeichnet. Die Überkehrerntegutmenge 29 fällt auf einen schräg verlaufenden Auffangboden 30 unterhalb der Reinigungseinrichtung 5 und gleitet in eine Ährenförderschnecke 31. Die Ährenförderschnecke 31 fördert die Überkehrerntegutmenge 29 in einen Ährenelevator 32, der sie erneut dem Dreschwerk 2 zuführt.

Die Körner 16, welche durch beide Siebe 6, 7 der Reinigungsvorrichtung 5 gelangt sind, fallen auf einen weiteren schräg verlaufenden Auffang- und Führungsboden 33 und gleiten in eine Kornförderschnecke 34, die die Körner 16 einem Kornelevator 35 zuführt. Der Kornelevator 35 fördert die Körner 16 in den Korntank 36.

Das Stroh 40 sowie ein bestimmter Prozentsatz an Verlustkörnern 41 wandern über den Hordenschüttler 3 zum hinteren Ende des Mähdreschers 1, wo sie einer Häcksel- und Verteilvorrichtung zugeführt werden. Das Stroh 40 sowie die Verlustkörner 41 fallen am Ende des Hordenschüttlers 3 in einen Strohhäcksler 42, der Bestandteil der Häcksel- und Verteilvorrichtung ist. Der Strohhäcksler 42 weist eine rotierende Häckslerwelle 43 auf, die in einem Häckslergehäuse 44 gelagert ist. Die Häckslerwelle 43 ist mit beweglichen Messern 45 besetzt, die mit im Häckslergehäuse 44 fest angeordneten Gegenmessern 46 kämmen. Mit diesen Messern 45, 46 wird das Stroh 40 zu Häckselgut zerkleinert und beschleunigt. Der größtenteils aus Spreu 37 bestehende Siebüberlauf 28, der nicht durch das Obersieb 6 hindurch fällt, gelangt über das Obersieb 6 in den hinteren Bereich des Mähdreschers 1 und wird ebenfalls dem Strohhäcksler 42 zugeführt. Der aus dem Strohhäcksler 42 austretende Gutstrom 47 wird über an späterer Stelle noch näher erläuterte, angetriebene Leitelemente 52 und diesen nachgeordneten Kanäle 53 an zwei Verteileinrichtungen 54 einer Verteilvorrichtung 50 weiterbefördert, die den Gutstrom 47 auf dem Feld verteilen.

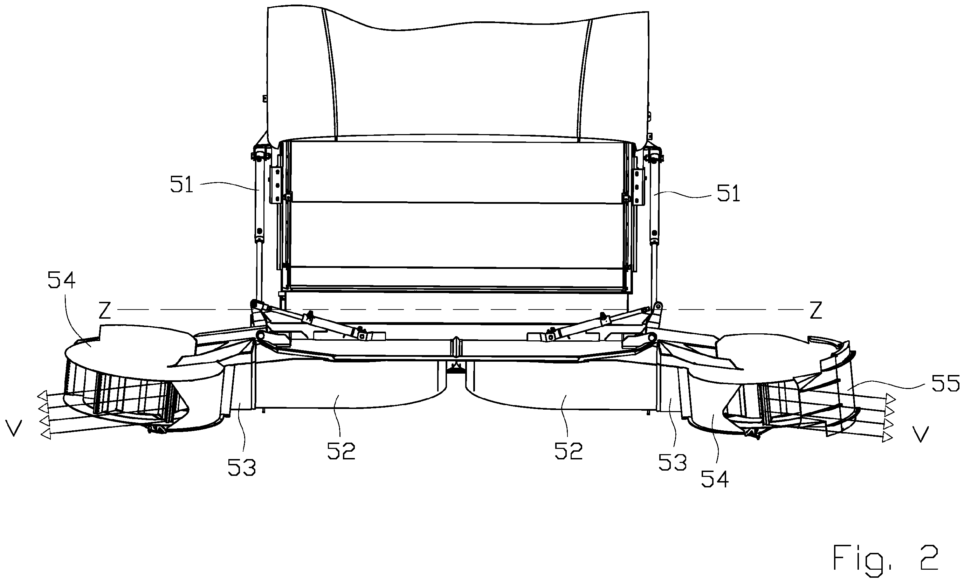

Die Darstellung in Fig. 2 zeigt eine perspektivische Ansicht von oben auf die Verteilvorrichtung 50 der Häcksel- und Verteilvorrichtung in ihrer Arbeitsposition. Die Verteilvorrichtung 50 ist durch eine Hebelanordnung 51 höhenverstellbar im hinteren Bereich des Mähdreschers angeordnet. Die Verteilvorrichtung 50 umfasst zwei, vorzugsweise mechanisch angetriebene Leitelemente 52, die quer zu der Längsachse des Strohhäckslers 42 an dem Mähdrescher 1 angeordnet sind. Weiterhin umfasst die Verteilvorrichtung 50 zwei Verteileinrichtungen 54, die über das jeweilige Leitelement 52 durch einen nach unten offenen, wannenförmigen Kanal 53 miteinander verbunden sind. Die Verteileinrichtung 54 ist vorzugsweise hydraulisch angetrieben. Der Antrieb der Leitelemente 52 sowie der Verteileinrichtung 54 kann alternativ auch ausschließlich durch mechanische oder durch hydraulische Antriebe erfolgen.

Die räumliche Anordnung der Leitelemente 52 und der Verteileinrichtung 54 in der Arbeitsposition der Verteilvorrichtung 50 zueinander ist derart ausgeführt, dass die Verteileinrichtung 54 zu der Längsachse des zugehörigen Leitelementes 52 geneigt ist. Zudem ist die Verteileinrichtung 54 auch quer zu der Längsachse des Leitelementes 52 geneigt ausgerichtet. Bei dieser Anordnung wird die Ausrichtung der Leitelemente 52 gegenüber dem Strohhäcksler 42 als Zuführebene Z bezeichnet, in der aus dem Strohhäcksler 42 austretende Gutstrom 47 den Leitelementen 52 zugeführt und von diesen beschleunigt wird. Hierzu umfasst das jeweilige Leitelement 52 einen um eine vertikale Achse rotierenden Rotor, der in einem Gehäuse angeordnet ist, welches mit Auslassöffnungen versehen ist. An diese Auslassöffnungen schließt sich radial jeweils der Kanal 53 an, der in die jeweilige Verteileinrichtung 54 mündet. Der Antrieb des jeweiligen Leitelementes 52 wird derart angesteuert, dass die Rotoren der Leitelemente 52 in entgegengesetzten Richtungen rotieren, um den aus dem Strohhäcksler 42 in Längsrichtung des Mähdreschers austretenden Gutstrom 47 in eine nahezu quer zur Längsrichtung verlaufende Richtung umzulenken. Hierzu stehen die Antriebe der Leitelemente 52 und der Verteileinrichtungen 54 mit einer Steuerungsvorrichtung in Verbindung, die über eine Bedienerschnittstelle in der Fahrerkabine des Mähdreschers 1 ansteuerbar ist. Durch die Steuerungsvorrichtung sind die jeweiligen Antriebe der Leitelemente 52 und der Verteileinrichtungen 54 unabhängig voneinander ansteuerbar, so dass der Gutstrom 47 stark beschleunigt werden kann.

Der aus den Leitelementen 52 austretende Gutstrom 47 wird von den jeweiligen Kanälen 53 der sich diesen anschließenden Verteileinrichtung 54 zugeführt, deren gegenüber der Horizontalen und der Vertikalen geneigte Ausrichtung gegenüber dem Leitelement 52 als Verteilebene V bezeichnet wird, wobei erfindungsgemäß die Verteilebene V unterhalb der Zuführebene Z liegt. Das Leitelement 52 und die Verteileinrichtung 54 sind in Längsrichtung des Strohhäckslers 42 gesehen derart versetzt zueinander angeordnet, dass der Gutstrom 47 tangential zur Wandung der Verteileinrichtung 54 in diese eintritt. Von der Verteilebene V aus wird der Gutstrom über eine einstellbare Verteilbreite, die vorzugsweise bis zur Hälfte der Schnittbreite des Schneidwerkes entspricht, verteilt. Die Einstellung der Verteilbreite lässt sich durch eine Änderung der Antriebsdrehzahlen der Leitelemente 52 sowie der Verteileinrichtungen 54 beeinflussen. Des Weiteren weisen die Verteileinrichtungen 54 jeweils zumindest eine verstellbare Teilummantelung 55 auf, die der variablen Veränderbarkeit der Auswurföffnung der Verteileinrichtungen 54 dienen. Derartige verstellbare Teilummantelungen 55 sind aus der EP 1 277 387 B1 bekannt, auf die hiermit ausdrücklich Bezug genommen wird.

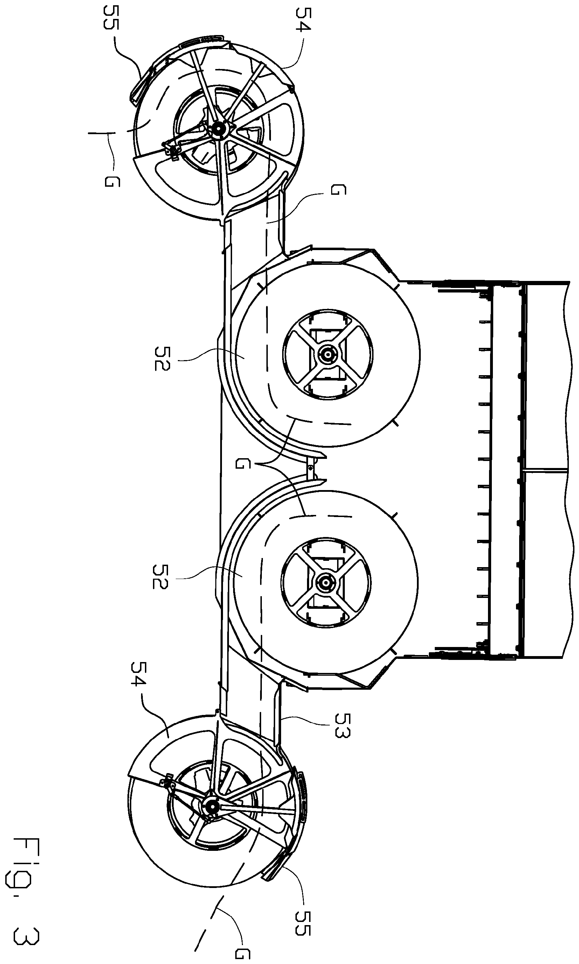

Der Fig. 3 ist eine Ansicht der Verteilvorrichtung 50 von unten dargestellt, aus der die zumindest abschnittsweise nach unten offene Ausführung des Leitelementes 52, des Kanals 53 sowie der Verteileinrichtung 54 zu entnehmen ist. Sowohl das Leitelement 52 als auch die Verteileinrichtung 54 sind dabei als so genannte Radialverteiler ausgeführt. Die nach unten offene Ausführung der Verteilvorrichtung 50 ist von Vorteil, wenn es zu einer Abschaltung der Verteilvorrichtung 50 wegen einer Unterbrechung des Gutstromes 47, beispielsweise durch die Abschaltung des Strohhäckslers 42 kommt. Das in der Verteilvorrichtung 50 befindliche Gut kann einfach nach unten herausfallen, so dass es nicht zu einer Verstopfung der Verteilvorrichtung 50 kommt.

Mit Bezug auf die Fig. 3 soll kurz auf den mit dem Bezugszeichen G versehenen Gutstromverlauf eingegangen werden, der als gestrichelte Linie angedeutet ist. Durch die Anordnung des Leitelementes 52, des Kanals 53 sowie der Verteileinrichtung 54 weist der Gutstromverlauf G eine im Wesentlichen S-förmige Kontur auf. Der Antrieb des dargestellten Leitelements 52 rotiert gegen den Uhrzeigersinn, um den auf der Zuführebene Z befindlichen Gutstrom 47 in Richtung der Verteileinrichtung 54 zu beschleunigen. Der Gutstrom 47 wird durch den Kanal 53 der Verteileinrichtung 54 zugeführt. Durch die höhenversetzte Anordnung der Zuführebene Z im Leitelement 52 und der Verteilebene V in der Verteileinrichtung 54 in Längsrichtung der Häcksel- und Verteilvorrichtung gesehen, tritt der aus dem Kanal 53 austretende der Gutstrom 47 tangential zur Wandung der Verteileinrichtung 54 in diese ein. Die bereits auf den Gutstrom 47 von dem Leitelement 52 aufgebrachte kinetische Energie bleibt dadurch beim Eintritt in die Verteileinrichtung 54 weitgehend erhalten. In der Verteileinrichtung 54 erfährt der Gutstrom 47 eine weitere, vorzugsweise stärkere Beschleunigung, zur Verteilung des Gutstromes 47 in variabler Verteilbreite auf dem Boden eines Feldes. Durch den zur Längsachse des Mähdreschers spiegelbildlichen Aufbau der in Fig. 2 dargestellten Verteilvorrichtung 50 rotieren die Antriebe des Leitelements 52 und der Verteileinrichtung 54 des nicht dargestellten Teiles in jeweils gegenläufiger Richtung.

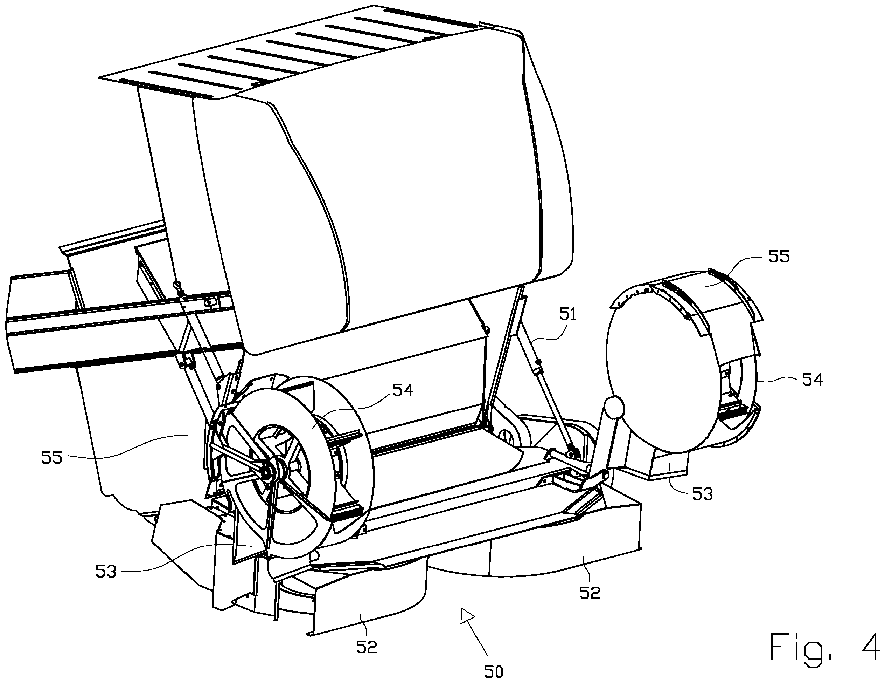

Fig. 4 zeigt eine perspektivische Ansicht der Verteilvorrichtung 50 in ihrer Transport- oder Schwadposition. Zu der Überführung in die Transport- oder Schwadposition der Verteilvorrichtung 50 sind die Verteileinrichtungen 54 um eine zu der Längsachse des Strohhäckslers 42 parallele Achse nach oben verschwenkbar, so dass die Verteileinrichtungen 54 nahezu senkrecht zu den Leitelementen 52 stehen. Somit wird die maximal für den Betrieb im Straßenverkehr zulässige Breite nicht überschritten. Zudem erlaubt diese Position der Verteilvorrichtung 50 die Ablage des aus dem Strohhäcksler 42 austretenden Gutstromes 47 als Schwade auf dem Boden des Feldes.

Des Weiteren ist die Häcksel- und Verteilvorrichtung modular aufgebaut, um eine einfache Austauschbarkeit der Komponenten zu erreichen, aber auch um eine Nachrüstung einer bereits bestehenden konventionellen Verteilvorrichtung durchführen zu können.

**Bezugszeichenliste**

| | | | |
|---|---|---|---|
| 1 | Mähdrescher | 31 | Ährenförderschnecke |
| 2 | Dreschwerk | 32 | Ährenelevator |
| 3 | Hordenschüttler | 33 | Auffang- und Führungsboden |
| 4 | Abscheideorgan | 34 | Kornförderschnecke |
| 5 | Reinigungseinrichtung | 35 | Kornelevator |
| 6 | Sieb | 36 | Korntank |
| 7 | Sieb | 37 | Spreu |
| 8 | Reinigungsgebläse | 40 | Stroh |
| 9 | Erntegut | 41 | Verlustkörner |
| 10 | Schneidwerk | 42 | Strohhäcksler |
| 11 | Schrägförderer | 43 | Häckslerwelle |
| 12 | Maschinengehäuse | 44 | Häckslergehäuse |
| 13 | Korn-Spreu-Gemisch | 45 | Messer |
| 14 | Dresch- und Abscheidekorb | 46 | Gegenmesser |
| 15 | Vorbereitungsboden | 47 | Gutstrom |
| 16 | Körner | | |
| 17 | Halmteile | 50 | Verteilvorrichtung |
| 18 | Spreuteile | 51 | Hebelanordnung |
| 19 | Wendetrommel | 52 | Leitelement |
| 20 | Gutstrom | 53 | Kanal |
| 21 | Sieböffnung | 54 | Verteileinrichtung |
| 22 | Rücklaufboden | 55 | Teilummantelung |
| 23 | Sieböffnung | G | Gutstromverlauf |
| 24 | Sieböffnung | V | Verteilebene |
| 25 | Erntegut | Z | Zuführebene |
| 26 | Siebdurchgang | | |
| 27 | Überkehrbereich | | |
| 28 | Siebüberlauf | | |
| 29 | Überkehrerntegutmenge | | |
| 30 | Auffangboden | | |

## Patentansprüche

1. Verfahren zur Verteilung eines Gutstromes (47) auf einem Feld, welcher aus einem Häckselorgan (42) einer Häcksel- und Verteilvorrichtung (50), insbesondere einem Anbauhäcksler an einem Mähdrescher (1), austritt, wobei der Gutstrom (47) mindestens einem quer zur Längsachse des Häckselorgans (42) angeordneten, als Radialverteiler ausgeführten Leitelement (52) zugeführt wird, durch welches der Gutstrom (47) beschleunigt und mindestens einer nachgeordneten Verteileinrichtung (54) zugeführt wird,
**dadurch gekennzeichnet, dass**
der aus dem mindestens einen Leitelement (52) austretende Gutstrom (47) von einer Zuführebene (Z), in der der Gutstrom (47) in das mindestens eine Leitelement (52) eintritt, auf eine unterhalb der Zuführebene (Z) liegende Verteilebene (V) gefördert wird, in der der Gutstrom (47) von der mindestens einen als Radialverteiler ausgeführten Verteileinrichtung (54) auf dem Feld verteilt wird.

2. Verfahren nach Anspruch 1, **dadurch gekennzeichnet, dass** die Verteilebene (V) gegenüber der Zuführebene (Z) quer und/oder senkrecht zu dieser geneigt wird.

3. Verfahren nach einem der Ansprüche 1 oder 2, **dadurch gekennzeichnet, dass** der aus dem Häckselorgan (42) austretende Gutstrom (47) in dem Leitelement (52) eine gegenüber der Verteileinrichtung (54) gegenläufige Beschleunigung erfährt.

4. Verfahren nach einem der Ansprüche 1 bis 3, **dadurch gekennzeichnet, dass** der Gutstrom (47) in dem Leitelement (52) und der Verteileinrichtung (54) unterschiedlich stark beschleunigt wird.

5. Verfahren nach einem der Ansprüche 3 oder 4, **dadurch gekennzeichnet, dass** die Beschleunigung des Gutstromes (47) in dem Leitelement (52) und der Verteileinrichtung (54) unabhängig voneinander eingestellt wird.

6. Häcksel- und Verteilvorrichtung, insbesondere Anbauhäcksler für Mähdrescher (1), zur Durchführung des Verfahrens nach einem der Ansprüche 1 bis 5, mit wenigstens einem Häckselorgan (42), dem zumindest eine Verteileinrichtung (54) zum Verteilen eines aus dem Häckselorgan (42) austretenden Gutstromes (47) zugeordnet ist, wobei der Gutstrom (47) der mindestens einen Verteileinrichtung (54) von mindestens einem quer zur Längsachse des Häckselorgans (42) angeordneten Leitelement (52) zugeführt wird, durch welches der Gutstrom (47) beschleunigt und der mindestens einen nachgeordneten Verteileinrichtung (54) zugeführt wird,
**dadurch gekennzeichnet, dass**
der aus dem mindestens einen Leitelement (52) austretende Gutstrom (47) von einer Zuführebene (Z), in der der Gutstrom (47) in das mindestens eine Leitelement (52) eintritt, auf eine unterhalb der Zuführebene (Z) liegende Verteilebene (V) gefördert wird, in der der Gutstrom (47) von der mindestens einen als Radialverteiler ausgeführten Verteileinrichtung (54) auf dem Feld verteilt wird.

7. Häcksel- und Verteilvorrichtung nach Anspruch 6, **dadurch gekennzeichnet, dass** die Verteileinrichtung (54) über einen nach unten offenen, profilierten Kanal (53) mit dem Leitelement (52) verbunden ist.

8. Häcksel- und Verteilvorrichtung nach Anspruch 7,
**dadurch gekennzeichnet, dass** das Leitelement (52) und die Verteileinrichtung (54) in Längsrichtung der Häcksel- und Verteilvorrichtung gesehen derart versetzt zueinander angeordnet sind, dass der Gutstrom (47) tangential zur Wandung der Verteileinrichtung (54) in diese eintritt.

9. Häcksel- und Verteilvorrichtung nach einem der Ansprüche 6 bis 8, **dadurch gekennzeichnet, dass** die Verteileinrichtung (54) um eine zur Längsachse der Verteilvorrichtung (50) parallele Achse verschwenkbar ist.

10. Häcksel- und Verteilvorrichtung nach einem der Ansprüche 6 bis 9, **dadurch gekennzeichnet, dass** das Leitelement (52) einen mechanischen Antrieb und die Verteileinrichtung (54) einen hydraulischen Antrieb aufweist.

11. Häcksel- und Verteilvorrichtung nach Anspruch 10, **dadurch gekennzeichnet, dass** die Antriebe des Leitelementes (52) und der Verteileinrichtung (54) unabhängig voneinander ansteuerbar sind.

12. Häcksel- und Verteilvorrichtung nach einem der Ansprüche 6 bis 11, **dadurch gekennzeichnet, dass** die Häcksel- und Verteilvorrichtung modular aufgebaut ist.

## Claims

1. A method of distributing a flow of crop (47) on a field, which emerges from a chopping member (42) of a chopping and distribution apparatus (50), in particular a chopper attachment on a combine harvester (1), wherein the flow of crop (47) is fed to at least one guide element (52) which is arranged transversely relative to the longitudinal axis of the chopping member (42) and which is in the form of a radial distributor and by which the flow of crop (47) is accelerated and fed to at least one downstream-disposed distribution device (54),
**characterised in that**
the flow of crop (47) issuing from the at least one guide element (52) is conveyed from a feed plane (Z) in which the flow of crop (47) passes into the at least one guide element (52) to a distribution plane (V) which is below the feed plane (Z) and in which the flow of crop (47) is distributed on the field by the at least one distribution device (54) which is in the form of a radial distributor.

2. A method according to claim 1 **characterised in that** the distribution plane (V) is inclined transversely relative to the feed plane (Z) and/or perpendicularly thereto.

3. A method according to one of claims 1 and 2 **characterised in that** the flow of crop (47) issuing from the chopping member (42) experiences acceleration in opposite relationship to the distribution device (54) in the guide element.

4. A method according to one of claims 1 to 3 **characterised in that** the flow of crop (47) is accelerated to differing degrees in the guide element (52) and the distribution device (54).,

5. A method according to one of claims 3 and 4 **characterised in that** acceleration of the flow of crop (47) in the guide element (52) and the distribution device (54) is adjusted independently of each other.

6. A chopping and distribution apparatus, in particular a chopping attachment for combine harvesters (1), for carrying out the method according to one of claims 1 to 5, comprising at least one chopping member (42) with which there is associated at least one distribution device (54) for distributing a flow of crop (47) issuing from the chopping member (42), wherein the flow of crop (47) is fed to the at least one distribution device (54) by at least one guide element (52) which is arranged transversely relative to the longitudinal axis of the chopping member (42) and by which the flow of crop (47) is accelerated and fed to the at least one downstream-disposed distribution device (54),
**characterised in that**
the flow of crop (47) issuing from the at least one guide element (52) is conveyed from a feed plane (Z) in which the flow of crop (47) passes into the at least one guide element (52) to a distribution plane (V) which is below the feed plane (Z) and in which the flow of crop (47) is distributed on the field by the at least one distribution device (54) which is in the form of a radial distributor.

7. A chopping and distribution apparatus according to claim 7 **characterised in that** the distribution device (54) is connected to the guide element (52) by way of a downwardly opened profiled passage (53).

8. A chopping and distribution apparatus according to claim 7 **characterised in that** the guide element (52) and the distribution device (54) are arranged in mutually displaced relationship in the longitudinal direction of the chopping and distribution apparatus in such a way that the flow of crop (47) passes into the distribution device (54) tangentially relative to the wall thereof.

9. A chopping and distribution apparatus according to one of claims 6 to 8 **characterised in that** the distribution device (54) is pivotable about an axis parallel to the longitudinal axis of the distribution apparatus (50).

10. A chopping and distribution apparatus according to one of claims 6 to 9 **characterised in that** the guide element (52) has a mechanical drive and the distribution device (54) has a hydraulic drive.

11. A chopping and distribution apparatus according to claim 10 **characterised in that** the drives of the guide element (52) and the distribution device (54) are actuable independently of each other.

12. A chopping and distribution apparatus according to one of claims 6 to 11 **characterised in that** the chopping and distribution apparatus is of a modular structure.

## Revendications

1. Procédé d'éparpillage d'un flux de produit (47) sur un champ, lequel flux de produit sort d'un organe de hachage (42) d'un dispositif de hachage et d'éparpillage (50), en particulier d'un hache-paille porté sur une moissonneuse-batteuse, le flux de produit (47) étant amené à au moins un élément de guidage (52) disposé transversalement à l'axe longitudinal de l'organe de hachage (47) et réalisé sous la forme d'un éparpilleur radial, par lequel le flux de produit (47) est accéléré et amené à au moins un dispositif d'éparpillage (54) situé en aval, **caractérisé en ce que** le flux de produit (47) sortant dudit au moins un élément de guidage (52) est transporté d'un plan d'amenée (Z), dans lequel le flux de produit (47) entre dans ledit au moins élément de guidage (52), à un plan d'éparpillage (V) qui est situé sous le plan d'amenée (Z) et dans lequel le flux de produit (47) est éparpillé sur le champ par ledit au moins un dispositif d'éparpillage (54) réalisé sous la forme d'un éparpilleur radial.

2. Procédé selon la revendication 1, **caractérisé en ce que** le plan d'éparpillage (V) est incliné transversalement et/ou perpendiculairement par rapport au plan d'amenée (Z).

3. Procédé selon l'une des revendications 1 ou 2, **caractérisé en ce que** le flux de produit (47) sortant de l'organe de hachage (42) subit dans l'élément de guidage (52) une accélération en sens contraire par rapport au dispositif d'éparpillage (54).

4. Procédé selon l'une des revendications 1 à 3, **caractérisé en ce que** le flux de produit (47) est accéléré de façon différente dans l'élément de guidage (52) et le dispositif d'éparpillage (54).

5. Procédé selon l'une des revendications 3 ou 4, **caractérisé en ce que** l'accélération du flux de produit (47) dans l'élément de guidage (52) et celle dans le dispositif d'éparpillage (54) sont réglées de façon indépendante l'une de l'autre.

6. Dispositif de hachage et d'éparpillage, en particulier hache-paille porté pour une moissonneuse-batteuse (1), pour mettre en oeuvre le procédé selon l'une des revendications 1 à 5, comprenant au moins un organe de hachage (42) auquel est associé au moins un dispositif d'éparpillage (54) pour éparpiller un flux de produit (47) sortant de l'organe de hachage (42), le flux de produit (47) étant amené audit au moins un dispositif d'éparpillage (54) par au moins un élément de guidage (52) qui est disposé transversalement à l'axe longitudinal de l'organe de hachage (42) et par lequel le flux de produit (47) est accéléré et amené audit au moins un dispositif d'éparpillage (54) situé en aval, **caractérisé en ce que** le flux de produit (47) sortant dudit au moins un élément de guidage (52) est transporté d'un plan d'amenée (Z), dans lequel le flux de produit (47) entre dans ledit au moins élément de guidage (52), à un plan d'éparpillage (V) qui est situé sous le plan d'amenée (Z) et dans lequel le flux de produit (47) est éparpillé sur le champ par ledit au moins dispositif d'éparpillage (54) réalisé sous la forme d'un éparpilleur radial.

7. Dispositif de hachage et d'éparpillage selon la revendication 6, **caractérisé en ce que** le dispositif d'éparpillage (54) est relié à l'élément de guidage (52) par un canal (53) profilé ouvert vers le bas.

8. Dispositif de hachage et d'éparpillage selon la revendication 7, **caractérisé en ce que**, vus dans la direction longitudinale du dispositif de hachage et d'éparpillage, l'élément de guidage (52) et le dispositif d'éparpillage (54) sont décalés l'un par rapport à l'autre, de sorte que le flux de produit (47) entre dans le dispositif d'éparpillage (54) tangentiellement à la paroi de celui-ci.

9. Dispositif de hachage et d'éparpillage selon l'une des revendications 6 à 8, **caractérisé en ce que** le dispositif d'éparpillage (54) peut pivoter autour d'un axe parallèle à l'axe longitudinal du dispositif d'éparpillage (50).

10. Dispositif de hachage et d'éparpillage selon l'une des revendications 6 à 9, **caractérisé en ce que** l'élément de guidage (52) présente un entraînement mécanique, et le dispositif d'éparpillage (54) un entraînement hydraulique.

11. Dispositif de hachage et d'éparpillage selon la revendication 10, **caractérisé en ce que** les entraînements de l'élément de guidage (52) et du dispositif d'éparpillage (54) peuvent être commandés indépendamment l'un de l'autre.

12. Dispositif de hachage et d'éparpillage selon l'une des revendications 6 à 11, **caractérisé en ce que** le dispositif de hachage et d'éparpillage est construit de manière modulaire.
